# EUROPÄISCHE PATENTSCHRIFT

(11) **EP 2 657 473 B1**
(45) Veröffentlichungstag und Bekanntmachung des Hinweises auf die Patenterteilung: **09.05.2018**
(21) Anmeldenummer: 13158516.8
(22) Anmeldetag: 11.03.2013
(51) Int. Cl.: F01N 3/00, F02M 25/025, F01P 3/20, F01N 1/00, F02M 25/022

(54) **Vorrichtung zur Wassergewinnung aus einem Abgassystem**
Device for extracting water from an exhaust gas system
Dispositif de récupération d'eau à partir d'un système de gaz d'échappement

(30) Priorität: 24.04.2012 DE 102012206679; 11.05.2012 DE 102012207903
(43) Veröffentlichungstag der Anmeldung: 30.10.2013
(73) Patentinhaber: Bayerische Motoren Werke Aktiengesellschaft, 80809 München (DE)
(72) Erfinder: Dr. Rubbert, Stephan, 85757 Karlsfeld (DE); Böhm, Martin, 82343 Pöcking (DE); Dr. Schuenemann, Erik, 80809 München (DE)

(56) Entgegenhaltungen:
- WO-A1-01/92710
- WO-A1-02/49912
- DE-A1-102009 052 571
- FR-A1- 2 870 892
- FR-A3- 2 926 325
- US-A- 3 983 882

## Beschreibung

Die Erfindung betrifft eine Vorrichtung zur Wassergewinnung aus einem Abgassystem einer Brennkraftmaschine mit den Merkmalen aus dem Oberbegriff des Patentanspruchs 1.
Aufgeladene Otto-Brennkraftmaschinen werden im überwiegenden Kennfeldbereich an der Klopfgrenze betrieben und der verbrauchsoptimale Zündwinkel kann nicht eingestellt werden. Das Ergebnis ist eine verschleppte Verbrennung, die zu hohen Abgastemperaturen führt. Um den Turbolader und das Abgassystem zu schützen, muss die Brennkraftmaschine bei hoher Last und Drehzahl mit angereichertem Gemisch betrieben werden, d. h. mit einem Kraftstoffüberschuss (λ < 1). Dieser Betrieb führt zu erheblichen Nachteilen im Wirkungsgrad und relativ hohen Schadstoffemissionen, da der Arbeitsbereich des Katalysators verlassen wird.
Mit einer Wassereinspritzung in den Brennraum bzw. in die Ansaugluft lässt sich die klopfende Verbrennung unterdrücken und die Brennkraftmaschine kann auch bei hoher Last verbrauchsoptimal betrieben werden. Zusätzlich besteht mit einer Wassereinspritzung das Potential, über ein erhöhtes Verdichtungsverhältnis in großen Kennfeldbereichen Kraftstoffverbrauchs- und weitere Funktionsvorteile zu erzielen.

Für hinreichende Effekte der Wassereinspritzung muss mindestens ca. 10 bis 30 % der Kraftstoffmasse zusätzliche Wassermasse der Verbrennung zugeführt werden. Dazu ist ein Wassertank erforderlich mit einer Füllmenge von mindestens ca. 10 bis 30 % des Kraftstofftanks. Der Wassertank verursacht damit ein Mehrgewicht und blockiert den Bauraum für andere Aggregate. Das Wasser muss regelmäßig bei jedem Tanken ergänzt werden. Es besteht das Risiko von Fehlbetankungen. Um das Einfrieren im Winterbetrieb zu verhindern ist ferner eine Beheizung erforderlich. Um den Wasserverbrauch im Fahrbetrieb zu minimieren, wird die Wassereinspritzung deshalb häufig nur in wenigen Betriebszuständen eingesetzt und der mögliche Kraftstoffverbrauchsvorteil wird nur teilweise erreicht.

Um diese Nachteile zu vermeiden, werden in der internationalen Patentanmeldung WO 01/92710 A1 ein Verfahren und eine Vorrichtung zur Wassergewinnung aus einem Abgassystem einer Verbrennungskraftmaschine vorgeschlagen. Aus dieser Offenlegungsschrift ist eine Kondensationsanordnung zur Erzeugung einer erforderlichen Menge Wasser durch Kondensation von dem im Abgas der Verbrennungskraftmaschine enthaltendem Wasserdampf vorgeschlagen. Dieses kondensierte Wasser dient insbesondere für eine Wassereinspritzanlage für die Verbrennungskraftmaschine eines Kraftfahrzeuges. In dieser Kondensationsanordnung wird das kondensierte Wasser in einer Leitungsanordnung geführt und in einem Behälter gespeichert. Die Kondensationsanordnung ist dadurch gekennzeichnet, dass eine Kondensationsvorrichtung über den gesamten Betriebsbereich der Verbrennungskraftmaschine einen mittleren Kondensationswirkungsgrad von mindestens 25 %, vorzugsweise mindestens 50 % aufweist. Hierdurch wird eine separate Bereitstellung von zusätzlichem Wasser für die Wassereinspritzung vermieden. Dokument US3983882 A offenbart einen Kondensator, der auch als Schalldämpfer funktioniert.

Aufgrund der immer komplexeren Fahrzeugaufbauten liegt der vorliegenden Erfindung die Aufgabe zugrunde, eine gattungsgemäße Vorrichtung zur Wassergewinnung aus einem Abgassystem bauraumgünstiger darzustellen.
Diese Aufgabe ist durch das Merkmal im kennzeichnenden Teil des Patentanspruchs 1 gelöst.

Mit einer Wassergewinnung im Fahrbetrieb lassen sich somit ein größerer Wassertank und eine aufwendige Heizung vermeiden. Mit einem Kondensator und einer Filteranlage lässt sich kontinuierlich Wasser aus dem Abgas der Brennkraftmaschine entziehen und für die Wassereinspritzung einsetzen. Der Kondensator sollte hierbei möglichst brennkraftmaschinenfern in einem Schalldämpfer, z. B. in einem Nachschalldämpfer, integriert sein, um mit möglichst kaltem Abgas beaufschlagt zu werden, damit die für die Kondensation des Wassers erforderliche Abgaskühlung nur eine geringe Kühlleistung erfordert. Um das Abgas zu kühlen, sollte ein Niedertemperaturkreislauf, z. B. mit Kühlwasser der Brennkraftmaschine, eingesetzt werden. Damit bei hohen Abgasdurchsätzen das Kühlwasser nicht siedet und zum Schutz des Abgaskondensators, muss bei diesen Betriebszuständen mindestens ein Teil des Abgasmassenstroms durch einen Bypass am Kondensator vorbeigeleitet werden. Mit einer geeigneten Betriebsstrategie kann man somit bevorzugt das Wasser im Teillastbetrieb bei niedriger Abgastemperatur und niedriger Partikelbelastung kondensieren.
Mit dem beschriebenen System kann in vorteilhafter Weise das häufige Auffüllen des Wassertanks entfallen, ein Risiko für Fehlbetankungen besteht nicht. Das Speichervolumen kann deutlich kleiner gehalten werden. Die Gewichts- und Bauraumprobleme werden erfindungsgemäß vermieden. Da größere Wassermassen zur Verfügung stehen, kann die Wassereinspritzung in einem größeren Kennfeldbereich eingesetzt werden und der Kraftstoffverbrauchsvorteil ist größer. Mit einer speziellen Brennkraftmaschinenauslegung, wie z. B. einem höheren Verdichtungsverhältnis oder einem höheren Ladedruck, lässt sich die vorteilhafte Wirkung der Wassereinspritzung auf den Kraftstoffverbrauch weiter steigern. Eine aufwendige Heizung des Wassertanks ist nicht erforderlich. Der Speichertank kann auch mit auskondensiertem Wasser aus der Klimaanlage versorgt werden oder z. B. beim Tanken aufgefüllt werden.

Vorteilhafte Weiterbildungen der Erfindung sind in den Unteransprüchen beschrieben.

Mit einer Ausgestaltung gemäß Patentanspruch 2 wird der Wirkungsgrad des Kondensators weiter verbessert.

Mit einer Ausgestaltung gemäß Patentanspruch 3 wird der Betriebsbereich des Kondensators wesentlich vergrößert.

Die Ausgestaltungen gemäß Patentanspruch 4 und 5 sind besonders bevorzugte Ausführungsbeispiele.

Im Folgenden ist die Erfindung anhand eines Ausführungsbeispieles in einer einzigen schematischen Figur näher erläutert.

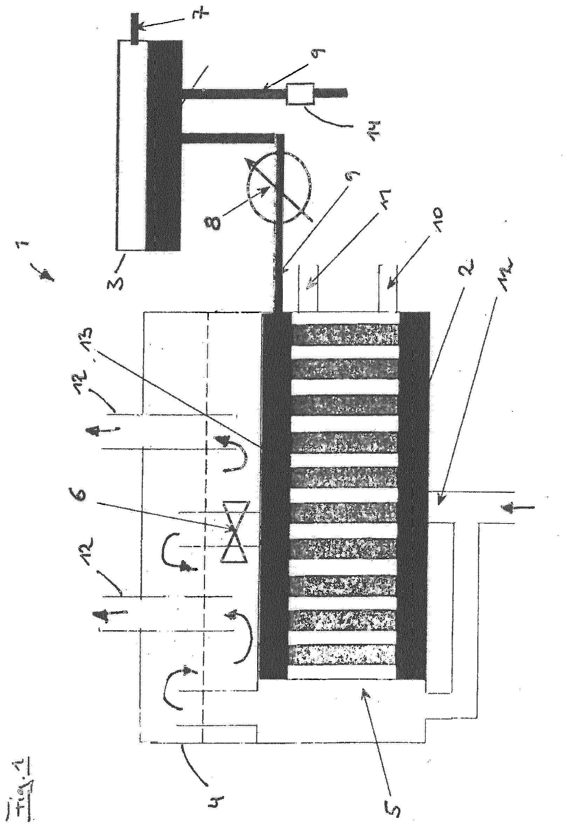

- Fig. 1: zeigt schematisch eine erfindungsgemäße Vorrichtung zur Wassergewinnung aus einem Abgassystem.

Fig. 1 zeigt schematisch eine erfindungsgemäße Vorrichtung 1 zur Wassergewinnung aus einem Abgassystem einer nicht dargestellten Brennkraftmaschine, insbesondere für eine Wassereinspritzanlage für die Brennkraftmaschine. Zum Kondensieren von einem in einem Abgas der Brennkraftmaschine enthaltenden Wasserdampf zum flüssigen Wasser ist in dem Abgassystem ein Kondensator 2 angeordnet. Das auskondensierte Wasser ist hierbei in einem Sammelbehälter 3 der Wassereinspritzanlage zur Wiedereinspritzung in einen Verbrennungsprozess der Brennkraftmaschine sammelbar und wird mit einer Pumpe 8 durch eine Leitung 9 zur Wassereinspritzanlage in den Sammelbehälter 3 gefördert. Zur Überprüfung der Füllhöhe des Sammelbehälters 3 ist ferner ein Wasserfüllstandssensor 7 vorgesehen. Um eventuelle Verunreinigungen aus dem kondensierten Wasser zu entfernen ist in der Leitung 9 ein Kondensatfilter vorgesehen. Hierdurch ist sichergestellt, dass kein durch Partikel verunreinigtes Wasser in die Wassereinspritzanlage kommt.

Der Kondensator 2 ist in einem Schalldämpfer 4 des Abgassystems angeordnet, insbesondere in einem Nachschalldämpfer.

In dem dargestellten bevorzugten Ausführungsbeispiel wird die Brennkraftmaschine mit einer Kühlflüssigkeit gekühlt, wobei der Kondensator 2 von der Kühlflüssigkeit durchströmbar ist. Hierfür sind ein Kühlmitteleintritt 10 und ein Kühlmittelaustritt 11 vorgesehen. Der Kühlmitteleintritt 10 für das Kühlmittel ist auf einer heißen Seite des Kondensators 2 angeordnet, eine kalte Seite des Kondensators ist mit 13 beziffert.

Die heißen Abgase strömen durch ein Abgasrohr 12 in Richtung Kondensator 2 in den Schalldämpfer 4, wobei in dem Schalldämpfer 4 vor dem Kondensator 2 erfindungsgemäß ein Bypass 5 für das Abgas zur Umgehung des Kondensators 2 vorgesehen ist. Durch diese Maßnahme wird der Betriebsbereich des Kondensators 2 wesentlich vergrößert. Zur Steuerung der Abgasdurchflussmenge durch den Kondensator 2 ist ferner an dem Kondensator 2 und/oder dem Bypass 5 ein Abgasdurchflussstellelement 6 vorgesehen. Im einfachsten Fall eine steuer- oder regelbare Absperrklappe. Nach Durchtritt des Abgases durch den Bypass 5 oder den Kondensator 2 treten die Abgase gemäß den schematisch eingezeichneten Pfeilen durch den eigentlichen Schalldämpfer, dargestellt durch eine gestrichelte Linie.

Die somit beschriebene erfindungsgemäße Vorrichtung 1 zeichnet sich durch ein äußerst kleines Package aus, wobei der Kondensator 2 teilweise auch die Funktion eines Schalldämpfers übernehmen kann. Mit der beschriebenen Vorrichtung 1 kann somit das häufige Auffüllen des Sammelbehälters 3 entfallen, ein Risiko für Fehlbetankungen besteht dann nicht. Das Speichervolumen des Sammeltanks 3 kann aufgrund der kontinuierlichen Wassergewinnung deutlich kleiner gehalten werden. Die Gewichts- und Bauraumprobleme werden erfindungsgemäß vermieden. Da größere Wassermassen zur Verfügung stehen, kann die Wassereinspritzung in einem größeren Kennfeldbereich eingesetzt werden und der Kraftstoffverbrauchsvorteil ist größer. Mit einer speziellen Auslegung der Brennkraftmaschine, wie z. B. einem höheren Verdichtungsverhältnis oder einem höheren Ladedruck, lässt sich die vorteilhafte Wirkung der Wassereinspritzung auf den Kraftstoffverbrauch nochmals weiter steigern. Eine aufwendige Beheizung des Sammelbehälters 3 ist nicht erforderlich, da die heißen Abgase die Temperierung des Wassers übernehmen. Der Sammelbehälter 3 kann auch mit Kondenswasser aus einer Klimaanlage gefüllt oder beim Tanken aufgefüllt werden.

## Patentansprüche

1. Vorrichtung (1) zur Wassergewinnung aus einem Abgassystem einer Brennkraftmaschine, mit einem Schalldämpfer (4) und einem Kondensator (2), insbesondere für eine Wassereinspritzanlage für die Brennkraftmaschine, wobei der Kondensator (2) in dem Schalldämpfer (4) des Abgassystems angeordnet ist, wobei der Kondensator (2) zum Kondensieren von einem in einem Abgas der Brennkraftmaschine enthaltenen Wasserdampf zu flüssigem Wasser in dem Abgassystem angeordnet ist und wobei das Wasser in einem Sammelbehälter (3) der Wassereinspritzanlage zur Wiedereinspritzung zu einem Verbrennungsprozess der Brennkraftmaschine sammelbar ist, **dadurch gekennzeichnet, dass** in dem Schalldämpfer (4) ein Bypass (5) für das Abgas zur Umgehung des Kondensators (2) vorgesehen ist.

2. Vorrichtung nach Patentanspruch 1, wobei die Brennkraftmaschine eine Kühlung mit einer Kühlflüssigkeit aufweist,
**dadurch gekennzeichnet, dass** der Kondensator (2) von der Kühlflüssigkeit durchströmbar ist.

3. Vorrichtung nach Patentanspruch 1 oder 2,
**dadurch gekennzeichnet, dass** in dem Kondensator (2) und/oder dem Bypass (5) ein Abgasdurchfluss-Stellelement (6) vorgesehen ist.

4. Vorrichtung nach einem der Patentansprüche 1 bis 3,
**dadurch gekennzeichnet, dass** in dem Sammelbehälter (3) ein Wasserfüllstandsensor (7) vorgesehen ist.

5. Vorrichtung nach einem der Patentansprüche 1 bis 4,
**dadurch gekennzeichnet, dass** das Wasser mit einer Pumpe (8) aus dem Kondensator (2) abpumpbar ist.

## Claims

1. A device (1) for recovering water from an exhaust system of an internal combustion engine, with a silencer (4) and a condenser (2), especially for a water injection system for the internal combustion engine, wherein the condenser (2) is arranged in the silencer (4) of the exhaust system, wherein the condenser (2) for condensing steam contained in an exhaust of the internal combustion engine into liquid water is arranged in the exhaust system, and wherein the water can be collected in a collecting container (3) of the water injection system for reinjecting into a combustion process of the internal combustion engine,
**characterised in that** a bypass (5) for the exhaust to circumvent the condenser (2) is provided in the silencer (4).

2. A device according to Claim 1, wherein the internal combustion engine has a cooling means with a cooling fluid,
**characterised in that** the flow of cooling fluid can pass through the condenser (2).

3. A device according to Claim 1 or Claim 2,
**characterised in that** an exhaust throughflow-setting element (6) is provided in the condenser (2) and/or the bypass (5).

4. A device according to one of Claims 1 to 3,
**characterised in that** a water filling-level sensor (7) is provided in the collecting container (3).

5. A device according to one of Claims 1 to 4,
**characterised in that** the water can be pumped out of the condenser (2) with a pump (8).

## Revendications

1. Dispositif (1) permettant de récupérer de l'eau dans le système des gaz d'échappement d'un moteur à combustion interne comprenant un pot d'échappement (4) et un condenseur (2), en particulier destiné à une installation d'injection d'eau dans le moteur le condenseur (2) étant monté dans le pot d'échappement (4) du système des gaz d'échappement, pour permettre de condenser de la vapeur d'eau renfermée dans les gaz d'échappement du moteur pour obtenir de l'eau liquide dans le système des gaz d'échappement, l'eau pouvant être recueillie dans un réservoir de collecte (3) de l'installation d'injection d'eau pour permettre sa réinjection dans un processus de combustion du moteur,
**caractérisé en ce qu'**
il est prévu dans le pot d'échappement (4) une dérivation (5) des gaz d'échappement permettant de contourner le condenseur (2).

2. Dispositif conforme à la revendication 1,
dans lequel le moteur à combustion interne comporte un système de refroidissement avec un fluide de refroidissement,
**caractérisé en ce que**
le condenseur (2) peut être parcouru par le fluide de refroidissement.

3. Dispositif conforme à la revendication 1 ou 2,
**caractérisé en ce qu'**
il est prévu dans le condenseur (2) et/ou la dérivation (5) un élément de réglage (6) du débit des gaz d'échappement.

4. Dispositif conforme à l'une des revendications 1 à 3,
**caractérisé en ce qu'**
il est prévu un capteur de niveau d'eau (7) dans le réservoir de collecte (3).

5. Dispositif conforme à l'une des revendications 1 à 4,
**caractérisé en ce que**
l'eau peut être évacuée par pompage du condenseur (2) au moyen d'une pompe (8).
